(19) Europäisches Patentamt / European Patent Office / Office européen des brevets

(11) **EP 3 771 373 B1**

(12) **EUROPÄISCHE PATENTSCHRIFT**

(45) Veröffentlichungstag und Bekanntmachung des Hinweises auf die Patenterteilung:
**06.09.2023 Patentblatt 2023/36**

(21) Anmeldenummer: **20185042.7**

(22) Anmeldetag: **09.07.2020**

(51) Internationale Patentklassifikation (IPC):
**A47J 36/32** (2006.01)    **A47J 43/07** (2006.01)

(52) Gemeinsame Patentklassifikation (CPC):
**A47J 36/32; A47J 43/075**

(54) **KÜCHENMASCHINE UND VERFAHREN ZUR ERHÖHUNG DER SICHERHEIT EINER KÜCHENMASCHINE**

KITCHEN APPLIANCE AND METHOD FOR INCREASING THE SAFETY OF A KITCHEN APPLIANCE

ROBOT DE CUISINE ET PROCÉDÉ D'AMÉLIORATION DE LA SÉCURITÉ D'UN ROBOT DE CUISINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.07.2019 DE 102019211283**

(43) Veröffentlichungstag der Anmeldung:
**03.02.2021 Patentblatt 2021/05**

(73) Patentinhaber: **BSH Hausgeräte GmbH**
**81739 München (DE)**

(72) Erfinder:
• **Brinovsek, Luka**
  **3341 Smartno ob Dreti (SI)**
• **Blischke, Daniela**
  **84529 Tittmoning (DE)**
• **Has, Uwe**
  **84579 Unterneukirchen (DE)**
• **Kick, Bernhard**
  **83301 Traunreut (DE)**

(56) Entgegenhaltungen:
EP-A1- 2 730 203          CN-A- 109 381 081
DE-U1-202011 050 875     US-A1- 2019 045 973

EP 3 771 373 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine Küchenmaschine und ein Verfahren zum Betrieb einer Küchenmaschine, mit dem eine Küchenmaschine vor kritischen Nutzungssituationen geschützt werden kann.

Eine Küchenmaschine umfasst einen Behälter, in dem ein Nahrungsmittel aufgenommen werden kann, um das Nahrungsmittel innerhalb des Behälters zu verarbeiten. Im Rahmen der Verarbeitung des Nahrungsmittels kann eine Temperierung (insbesondere ein Kühlen oder ein Erhitzen bzw. Aufwärmen) des Inhalts erfolgen. Dabei kann es vorkommen, dass die Küchenmaschine von einem Nutzer unsachgemäß genutzt wird, was ggf. zu einer kritischen Situation führen kann.

EP 2 730 203 A1 beschreibt eine Küchenmaschine mit unterschiedlichen Temperatursensoren zur Steuerung eines Rührwerks. DE 20 2011 050875 A1 beschreibt eine Küchenmaschine mit mehreren Temperatursensoren zur Erkennung einer Überfüllung des Rührgefäßes der Küchenmaschine. US 2019/045973 A1 beschreibt ein Kochgerät, das in unterschiedlichen Modi betrieben werden kann. CN 109 381 081 A beschreibt eine Küchenmaschine mit Heizfunktion.

Das vorliegende Dokument befasst sich mit der technischen Aufgabe, die Sicherheit einer Küchenmaschine in effizienter und zuverlässiger Weise zu erhöhen.

Die Aufgabe wird jeweils durch den Gegenstand der unabhängigen Patentansprüche gelöst. Vorteilhafte Ausführungsformen sind insbesondere in den abhängigen Patentansprüchen definiert, in nachfolgender Beschreibung beschrieben oder in der beigefügten Zeichnung dargestellt.

Gemäß einem Aspekt der Erfindung wird eine Küchenmaschine (insbesondere eine Küchenmaschine mit Kochfunktion) beschrieben. Die Küchenmaschine umfasst einen Behälter (z.B. mit einem Fassungsvermögen von 2 Litern oder mehr, oder von 3 Litern oder mehr) zur Aufnahme eines Nahrungsmittels. Des Weiteren umfasst die Küchenmaschine eine Heizeinheit (z.B. mit ein oder mehreren Heizwiderständen), die eingerichtet ist, den Behälter von zumindest einer Seite des Behälters (insbesondere von der Unterseite oder vom Boden des Behälters) her zu erwärmen. Die Heizeinheit kann ggf. darauf beschränkt sein, nur genau eine Seite des Behälters (insbesondere die Unterseite des Behälters) zu erwärmen bzw. zu erhitzen.

Des Weiteren umfasst die Küchenmaschine einen ersten Temperatursensor, der eingerichtet ist, erste Temperaturdaten in Bezug auf eine erste Temperatur an einer ersten Stelle des Behälters zu erfassen. Die erste Stelle kann an der Unterseite bzw. an dem Boden des Behälters angeordnet sein. Der erste Temperatursensor kann z.B. einen temperaturabhängigen Messwiderstand umfassen. So können die ersten Temperaturdaten in präziser und zuverlässiger Weise ermittelt werden.

Ferner umfasst die Küchenmaschine einen zweiten Temperatursensor, der eingerichtet ist, zweite Temperaturdaten in Bezug auf eine zweite Temperatur an einer zweiten Stelle des Behälters zu erfassen. Die zweite Stelle kann an einer Seitenwand des Behälters angeordnet sein. Dabei kann die zweite Stelle insbesondere um 5mm oder mehr, oder um 10mm oder mehr von dem Boden und/oder von der Unterseite des Behälters beabstandet sein.

Der zweite Temperatursensor kann einen Infrarot (IR) Sensor umfassen, der auf die zweite Stelle des Behälters gerichtet ist, und der eingerichtet ist, zweite Temperaturdaten in Bezug auf die Intensität von Strahlung im Infrarot-Spektralbereich zu erfassen, die von der zweiten Stelle des Behälters ausgeht. So können die zweiten Temperaturdaten in präziser und zuverlässiger Weise ermittelt werden.

Es können somit Temperaturdaten in Bezug auf die Temperatur an unterschiedlichen Stellen des Behälters bereitgestellt werden. Insbesondere können dabei die erste Stelle und die zweite Stelle an unterschiedlich orientierten Wänden des Behälters angeordnet sind. Alternativ oder ergänzend können die erste Stelle und die zweite Stelle um 5cm oder mehr voneinander beabstandet sein. Auf Basis der Temperaturdaten der unterschiedlichen Stellen kann auf die Temperatur des Inhalts (insbesondere des Nahrungsmittels) des Behälters in unterschiedlichen Bereichen des Behälters geschlossen werden.

Außerdem umfasst die Küchenmaschine eine Steuereinheit (z.B. mit einem Mikroprozessor), die eingerichtet ist, auf Basis der ersten Temperaturdaten und auf Basis der zweiten Temperaturdaten eine kritische Nutzungssituation der Küchenmaschine zu detektieren. Ein kritische Nutzungssituation kann dabei eine Situation sein, die einen Nutzer der Küchenmaschine gefährden könnte und/oder die die Küchenmaschine beeinträchtigen könnte. Eine beispielhafte Nutzungssituation ist z.B. die Nutzung der Küchenmaschine zum Frittieren (wofür die Küchenmaschine ggf. nicht ausgelegt ist). Eine weitere beispielhafte Nutzungssituation ist z.B. die Nutzung der Küchenmaschine zum Auftauen einer größeren Menge eines Nahrungsmittels, bei der ein Erwärmen des Bodens des Behälters zu einer kritischen Drucksituation innerhalb des Behälters führen könnte.

Die Steuereinheit ist ferner eingerichtet, in Reaktion darauf, dass eine kritische Nutzungssituation detektiert wurde, zumindest eine Maßnahme in Bezug auf die kritische Nutzungssituation zu veranlassen. Die Maßnahme kann darauf ausgerichtet sein, ein oder mehrere Auswirkungen der kritischen Nutzungssituation auf die Küchenmaschine und/oder auf den Nutzer der Küchenmaschine zumindest abzumildern. Beispielhafte Maßnahmen sind: das Ausgeben eines Hinweises in Bezug auf die kritische Nutzungssituation an einen Nutzer der Küchenmaschine (z.B. über eine Benutzerschnittstelle der Küchenmaschine), und/oder das Unterbinden oder das Drosseln des Betriebs der Heizeinheit (um den Behälter weniger stark oder gar nicht zu erwärmen).

Es kann somit durch die Auswertung der Temperaturdaten an zwei unterschiedlichen Stellen des Behälters einer Küchenmaschine, die Sicherheit der Küchenmaschine in effizienter und zuverlässiger Weise erhöht werden.

Die Steuereinheit kann eingerichtet sein, die durch die ersten Temperaturdaten angezeigte erste Temperatur mit der durch die zweiten Temperaturdaten angezeigten zweiten Temperatur zu vergleichen, um eine kritische Nutzungssituation der Küchenmaschine zu detektieren.

Wie bereits oben dargelegt können die ersten Temperaturdaten und/oder die erste Temperatur als Indikator für die Temperatur des Inhalts des Behälters (insbesondere eines Nahrungsmittels) in einem ersten Bereich des Behälters betrachtet werden. Des Weiteren können die zweiten Temperaturdaten und/oder die zweite Temperatur als Indikator für die Temperatur des Inhalts des Behälters in einem zweiten Bereich des Behälters (insbesondere des Nahrungsmittels) betrachtet werden. Es kann somit ein Vergleich der Temperaturen des Inhalts des Behälters in unterschiedlichen Bereichen erfolgen, um in besonders zuverlässiger Weise eine kritische Nutzungssituation der Küchenmaschine zu detektieren.

Der zweite Bereich kann oberhalb des ersten Bereichs angeordnet sein. Es können somit auf Basis der Temperaturdaten der unterschiedlichen Temperatursensoren die Temperaturen des Inhalts des Behälters in unterschiedlichen Schichten ausgewertet werden. Dies ermöglicht es, kritische Nutzungssituationen in besonders zuverlässiger Weise zu erkennen.

Die Steuereinheit kann eingerichtet sein, zu überprüfen, ob die erste Temperatur größer oder kleiner als die zweite Temperatur ist (bzw. ob die Temperatur des Inhalts in der oberen Schicht größer oder kleiner als die Temperatur in der unteren Schicht ist).

Alternativ oder ergänzend kann die Steuereinheit eingerichtet sein, zu überprüfen, ob die erste Temperatur und/oder die zweite Temperatur über einem oberen Temperatur-Schwellenwert liegen (bzw. ob die Temperatur des Inhalts in den unterschiedlichen Schichten größer als der obere Temperatur-Schwellenwert ist). Der obere Temperatur-Schwellenwert kann z.B. der Siedepunkt von Wasser oder höher sein. Beispielsweise kann der obere Temperatur-Schwellenwert 110°C oder höher, oder 120°C oder höher sein.

Alternativ oder ergänzend kann die Steuereinheit eingerichtet sein, zu überprüfen, ob die erste Temperatur und/oder die zweite Temperatur unter einem unteren Temperatur-Schwellenwert liegen (bzw. ob die Temperatur des Inhalts in den unterschiedlichen Schichten kleiner als der untere Temperatur-Schwellenwert ist). Der untere Temperatur-Schwellenwert kann z.B. der Gefrierpunkt von Wasser oder niedriger sein. Beispielsweise kann der untere Temperatur-Schwellenwert -1°C oder niedriger, oder -5°C oder niedriger sein.

Des Weiteren kann die Steuereinheit eingerichtet sein, basierend auf einer oder mehrerer der o.g. Überprüfungen eine kritische Nutzungssituation der Küchenmaschine zu detektieren. So kann eine kritische Nutzungssituation in besonders zuverlässiger Weise detektiert werden.

Die Steuereinheit kann beispielsweise eingerichtet sein, auf Basis der ersten Temperaturdaten an einem bestimmten Zeitpunkt zu bestimmen, dass die Temperatur des Inhalts des Behälters (insbesondere des Nahrungsmittels) in dem ersten Bereich an dem bestimmten Zeitpunkt über dem oberen Temperatur-Schwellenwert liegt. Des Weiteren kann die Steuereinheit eingerichtet sein, auf Basis der zweiten Temperaturdaten an dem bestimmten Zeitpunkt zu bestimmen, dass die Temperatur des Inhalts des Behälters (insbesondere des Nahrungsmittels) in dem zweiten Bereich an dem bestimmten Zeitpunkt über dem oberen Temperatur-Schwellenwert liegt. Es kann dann basierend darauf bestimmt werden, dass an dem bestimmten Zeitpunkt eine kritische Nutzungssituation der Küchenmaschine vorliegt, insbesondere dass eine (unzulässige) Nutzung der Küchenmaschine zum Frittieren vorliegt.

Der Nutzer kann daraufhin (z.B. über die Benutzerschnittstelle der Küchenmaschine) mittels eines Hinweises darüber informiert werden, dass eine kritische Nutzungssituation vorliegt (z.B. dass eine unzulässige Nutzung der Küchenmaschine zum Frittieren vorliegt). Des Weiteren kann der Nutzer aufgefordert werden, die kritische Nutzungssituation zu beenden. Alternativ oder ergänzend kann der Betrieb der Heizeinheit unterbrochen oder gedrosselt werden. So kann in besonders zuverlässiger Weise die Sicherheit der Küchenmaschine erhöht werden.

Alternativ oder ergänzend kann die Steuereinheit eingerichtet sein, auf Basis der ersten Temperaturdaten an einem bestimmten Zeitpunkt zu bestimmen, dass die Temperatur des Inhalts des Behälters (insbesondere des Nahrungsmittels) in dem ersten Bereich an dem bestimmten Zeitpunkt unter dem unteren Temperatur-Schwellenwert liegt. Des Weiteren kann die Steuereinheit eingerichtet sein, auf Basis der zweiten Temperaturdaten an dem bestimmten Zeitpunkt zu bestimmen, dass die Temperatur des Inhalts des Behälters (insbesondere des Nahrungsmittels) in dem zweiten Bereich an dem bestimmten Zeitpunkt unter dem unteren Temperatur-Schwellenwert liegt. Es kann dann basierend darauf in zuverlässiger Weise bestimmt werden, dass an dem bestimmten Zeitpunkt eine kritische Nutzungssituation der Küchenmaschine vorliegt, insbesondere dass eine Nutzung der Küchenmaschine zum Auftauen vorliegt.

Der Nutzer kann daraufhin (z.B. über die Benutzerschnittstelle der Küchenmaschine) mittels eines Hinweises darüber informiert werden, dass eine kritische Nutzungssituation vorliegt (z.B. dass eine Nutzung der Küchenmaschine zum Auftauen vorliegt). Des Weiteren kann der Nutzer aufgefordert werden, die kritische Nutzungssituation zu beenden.

Alternativ oder ergänzend kann der Betrieb der Heizeinheit unterbrochen oder gedrosselt werden. So kann in besonders zuverlässiger Weise die Sicherheit der Küchenmaschine erhöht werden.

Die Küchenmaschine kann einen Gewichtssensor umfassen, der eingerichtet ist, Gewichtsdaten in Bezug auf das Gewicht des Inhalts (insbesondere des Nahrungsmittels) in dem Behälter zu erfassen. Die Steuereinheit kann eingerichtet sein, unter Berücksichtigung der Gewichtsdaten zu bestimmen, ob eine kritische Nutzungssituation vorliegt oder nicht. Beispielsweise kann durch Berücksichtigung der Gewichtsdaten eine kritische Nutzungssituation erkannt werden, bei der das Heizelement mit leerem Behälter betrieben wird, und sich dabei eine relativ hohe erste Temperatur und eine im Vergleich zu der ersten Temperatur reduzierte zweite Temperatur ergeben. Durch die Berücksichtigung der Gewichtsdaten kann die Sicherheit der Küchenmaschine weiter erhöht werden.

Gemäß einem weiteren Aspekt der Erfindung wird ein Verfahren zur Erhöhung der Sicherheit einer Küchenmaschine beschrieben. Die Küchenmaschine umfasst einen Behälter zur Aufnahme eines Nahrungsmittels sowei eine Heizeinheit. Die Heizeinheit ist eingerichtet, den Behälter von zumindest einer Seite des Behälters her zu erwärmen bzw. zu erhitzen.

Das Verfahren umfasst das Erfassen von ersten Temperaturdaten in Bezug auf eine erste Temperatur an einer ersten Stelle des Behälters, sowie das Erfassen von zweiten Temperaturdaten in Bezug auf eine zweite Temperatur an einer zweiten Stelle des Behälters. Des Weiteren umfasst das Verfahren das Detektieren, auf Basis der ersten Temperaturdaten und auf Basis der zweiten Temperaturdaten, einer kritischen Nutzungssituation der Küchenmaschine, sowie in Reaktion darauf, das Bewirken zumindest einer Maßnahme in Bezug auf die kritische Nutzungssituation.

Es ist zu beachten, dass jegliche Aspekte des in diesem Dokument beschriebenen Verfahrens und/oder der beschriebenen Küchenmaschine in vielfältiger Weise miteinander kombiniert werden können. Insbesondere können die Merkmale der Patentansprüche in vielfältiger Weise miteinander kombiniert werden.

Im Weiteren wird die Erfindung anhand von in der beigefügten Zeichnung dargestellten Ausführungsbeispielen näher beschrieben. Dabei zeigen

Figur 1a ein Blockdiagramm einer beispielhaften Küchenmaschine;
Figur 1b eine Küchenmaschine in einer perspektivischen Ansicht;
Figur 1c die Basis einer Küchenmaschine ohne Behälter;
Figur 2 eine beispielhafte Vorrichtung zum Schutz einer Küchenmaschine; und
Figur 3 ein Ablaufdiagramm eines beispielhaften Verfahrens zum Schutz einer Küchenmaschine.

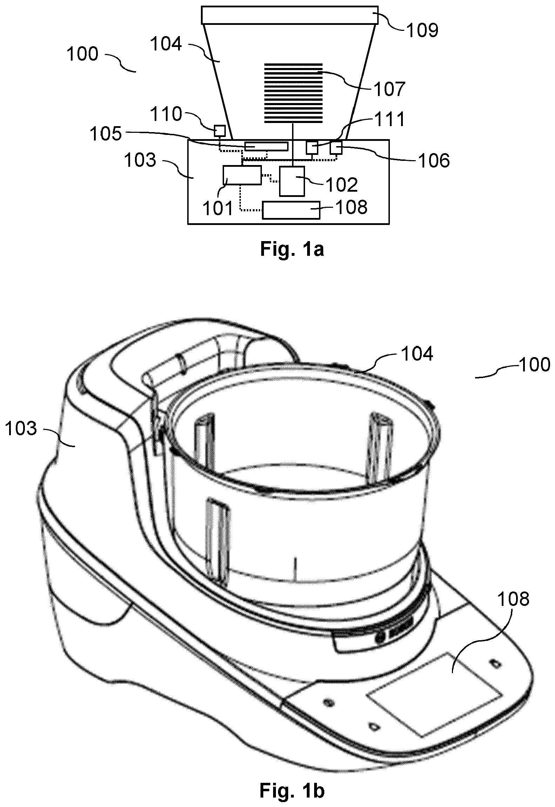

Wie eingangs dargelegt, befasst sich das vorliegende Dokument damit, eine Küchenmaschine in effizienter und zuverlässiger Weise vor einer unsachgemäßen Nutzung zu schützen. In diesem Zusammenhang zeigt Fig. 1a eine beispielhafte Küchenmaschine 100. Die in Fig. 1a dargestellte Küchenmaschine 100 umfasst einen Behälter 104, der auf einer Basis 103 der Küchenmaschine 100 angeordnet ist und in dem Zutaten für ein herzustellendes Nahrungsmittel verarbeitet werden können, z.B. mittels eines Werkzeugs bzw. Einsatzes 107, das bzw. der ggf. durch einen Motor 102 angetrieben wird. Dabei können ggf. unterschiedliche Werkzeuge 107 (z.B. ein Messer, ein Knethaken oder ein Besen) an dem Motor 102 montiert werden. Die Küchenmaschine 100 kann eingerichtet sein, den Behälter 104 mittels einer Temperierungseinheit 105 (z.B. einer Kühleinheit oder einer Heizeinheit) zu temperieren, z.B. zu kühlen (Kühleinheit) oder zu erwärmen (Heizeinheit).

Des Weiteren kann die Küchenmaschine 100 ein oder mehrere Sensoren 106, 111 umfassen, die eingerichtet sind, Sensordaten in Bezug auf die Küchenmaschine 100 (insbesondere in Bezug auf einen Zustand der Küchenmaschine 100) und/oder in Bezug auf das herzustellende Nahrungsmittel zu erfassen. Ein beispielhafter Sensor ist ein Basis-Temperatursensor 111, der eingerichtet ist, Temperaturdaten in Bezug auf die Temperatur des Behälters 104 und/oder des darin enthaltenen Nahrungsmittels zu erfassen. Der Basis-Temperatursensor 111 kann einen temperaturabhängigen Messwiderstand umfassen. Ein weiterer beispielhafter Sensor 106 ist ein Gewichtssensor bzw. eine Waage, der bzw. die eingerichtet ist, Gewichtsdaten in Bezug auf das Gewicht des Behälters 104 und/oder des darin enthaltenen Nahrungsmittels zu erfassen.

Außerdem kann die Küchenmaschine 100 eine Benutzerschnittstelle 108 umfassen, die es einem Nutzer ermöglicht, Steuereingaben an die Küchenmaschine 100 zu tätigen (z.B. über ein oder mehrere Knöpfe), und/oder die es der Küchenmaschine 100 ermöglicht, Rückmeldungen an einen Nutzer der Küchenmaschine 100 auszugeben (z.B. über einen Bildschirm und/oder über eine Anzeige). Insbesondere kann die Benutzerschnittstelle 108 dazu genutzt werden, Information in Bezug auf Arbeitsschritte eines Rezeptes zur Herstellung eines bestimmten Nahrungsmittels an einen Nutzer auszugeben.

Des Weiteren umfasst die Küchenmaschine 100 eine Steuereinheit 101, die eingerichtet sein kann, Rezeptdaten für ein Rezept zur Herstellung eines bestimmten Nahrungsmittels zu ermitteln (z.B. aus einer Speichereinheit der Küchenmaschine 100 auszulesen oder von einer Datenbank herunterzuladen). Ferner kann die Steuereinheit 101 eingerichtet sein, die Küchenmaschine 100 zumindest teilweise automatisch in Abhängigkeit von den Rezeptdaten zu betreiben, um den Nutzer bei der Herstellung des bestimmten Nahrungsmittels zu unterstützen.

Die Küchenmaschine 100 kann einen Deckel 109 zum Abdecken des Behälters 104 aufweisen. Dabei kann der Deckel 109 ggf. mittels einer Riegelvorrichtung (nicht dargestellt) verriegelt werden, um bei Bedarf den Zugang zu dem Behälter 104 zu unterbinden.

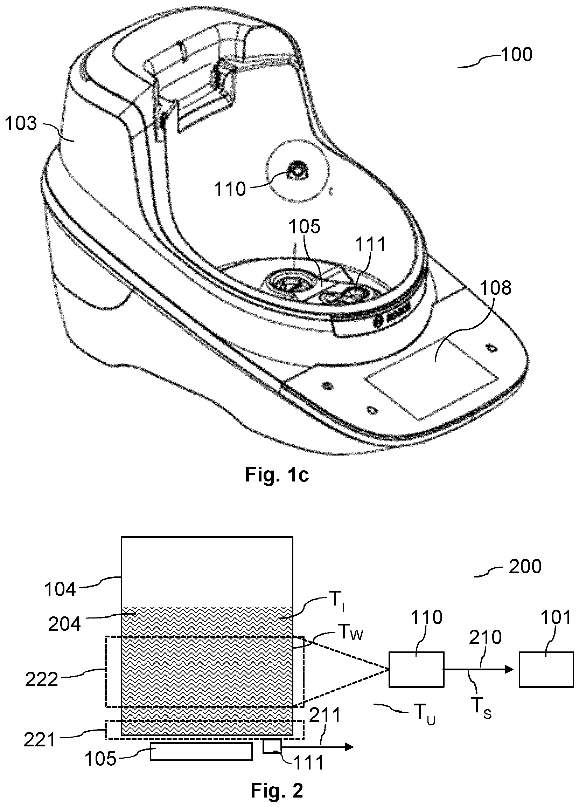

Fig. 1b zeigt eine beispielhafte Küchenmaschine 100 in einer perspektivischen Ansicht. Fig. 1c zeigt die Basis 103 einer beispielhaften Küchenmaschine 100 ohne Behälter 104.

Die Küchenmaschine 100 kann einen Infrarot (IR)-Sensor 110 (als weiteren Temperatursensor) umfassen, der eingerichtet ist, Sensordaten (d.h. Temperaturdaten) in Bezug auf die Oberfläche bzw. die Seitenwand des Behälters 104 zu erfassen. Der IR-Sensor 110 kann innerhalb der Basis 103 der Küchenmaschine 100 angeordnet und auf den Ort des (entnehmbaren) Behälters 104 gerichtet sein. Dabei kann der IR-Sensor 110 in einer bestimmten Höhe (z.B. 10mm oder mehr, oder 15mm oder mehr) vom Boden an der Seite des Behälters 104 angeordnet sein. Der IR-Sensor 110 ist eingerichtet, die von einer Oberfläche abgestrahlte (elektromagnetische) Strahlung im Infrarot-Bereich zu erfassen. Insbesondere kann dabei die Intensität der Strahlung erfasst werden. Auf Basis der erfassten Intensität der Strahlung kann auf die Temperatur der Oberfläche bzw. der Wand des Behälters 104 geschlossen werden.

Fig. 2 zeigt eine Vorrichtung 200, z.B. einen Ausschnitt der Küchenmaschine 100, mit dem Behälter 104 und dem außerhalb des Behälters 104 angeordneten IR-Sensors 110. Der IR-Sensor 110 ist eingerichtet, Sensordaten 210 in Bezug auf die Temperatur des Behälters 104 und/oder des in dem Behälter 104 angeordneten Inhalts 204 zu erfassen. Der Inhalt 204 in dem Behälter 104 weist eine Inhalts-Temperatur $T_I$ auf, die Wand des Behälters 104 weist eine Wand-Temperatur Tw auf und das Umfeld um den Behälter 104 weist eine Umfeld-Temperatur Tu auf. Die durch die Sensordaten 210 angezeigte Sensor-Temperatur Ts hängt typischerweise von der Inhalts-Temperatur $T_I$, der Wand-Temperatur Tw und/oder der Umfeld-Temperatur Tu ab. Andererseits kann z.B. die Wand-Temperatur Tw auf Basis der durch die Sensordaten 210 angezeigten Sensor-Temperatur Ts und der Umfeld-Temperatur Tu ermittelt werden, z.B. unter Verwendung des Stefan-Boltzmann-Gesetzes durch die Gleichung

$$T_{target\ surface} = \sqrt[4]{\frac{T_{raw\ sensor}^4 - (1-\varepsilon) \cdot T_{ambient}^4}{\varepsilon}}$$

wobei $T_{target\ surface}$ die Wand-Temperatur Tw ist, wobei $T_{raw\ sensor}$ die Sensor-Temperatur Ts ist, wobei $T_{ambient}$ die Umfeld-Temperatur Tu ist, und wobei $\varepsilon$ der Emissionsgrad der Wand des Behälters 104 ist. Durch eine Anpassung (insbesondere durch eine Reduzierung) des Emissionsgrads $\varepsilon$ kann es ermöglicht werden, durch Verwendung der o.g. Gleichung auf Basis der durch die Sensordaten 210 angezeigten Sensor-Temperatur Ts in präziser Weise die Inhalts-Temperatur $T_I$ des Inhalts 204 des Behälters 104 zu schätzen.

Fig. 2 zeigt ferner den Basis-Temperatursensor 111, der z.B. an der Basis 103 der Küchenmaschine 100 unterhalb des Behälters 104 angeordnet ist. Der Basis-Temperatursensor 110 kann einen temperaturabhängigen ohmschen Widerstand umfassen. Der Basis-Temperatursensor 111 ist eingerichtet, Temperaturdaten 211 (d.h. Sensordaten) in Bezug auf die Temperatur des Behälters 104 zu erfassen.

Die Vorrichtung 200 kann somit zwei unterschiedliche Temperatursensoren 110, 111 umfassen, die an unterschiedlichen Stellen angeordnet sind. Insbesondere kann die Vorrichtung 200 einen ersten Temperatursensor 111 (z. B. den Basis-Temperatursensor) umfassen, der eingerichtet ist, an einer ersten Stelle des Behälters 104 (z.B. am Boden des Behälters 104) erste Temperaturdaten zu erfassen. Die ersten Temperaturdaten zeigen eine erste Temperatur an der ersten Stelle des Behälters 104 an. Des Weiteren kann die Vorrichtung 200 einen zweiten Temperatursensor 110 (z.B. den IR-Sensor) umfassen, der eingerichtet ist, an einer zweiten Stelle des Behälters 104 (z.B. an einer Seitenwand des Behälters 104) zweite Temperaturdaten zu erfassen. Die zweiten Temperaturdaten zeigen eine zweite Temperatur an der zweiten Stelle des Behälters 104 an.

Die an der ersten Stelle erfasste erste Temperatur $T_1$ ist ein Indikator der Temperatur des Inhalts 204 des Behälters 104 in einem ersten Bereich 221 (z.B. am Boden des Behälters 104). In entsprechender Weise ist die an der zweiten Stelle erfasste zweite Temperatur $T_2$ ein Indikator der Temperatur des Inhalts 204 des Behälters 104 in einem zweiten Bereich 222 (z.B. in einer Höhe zwischen 5mm und 30mm innerhalb der Behälters 104). Die Analyse der ersten Temperatur und der zweiten Temperatur ermöglicht es somit, Informationen über ein oder mehrere Eigenschaften des Inhalts 204 des Behälters 104 zu ermitteln, und basierend darauf eine unsachgemäße Benutzung der Vorrichtung 200 und/oder eine kritische Nutzungssituation zu erkennen.

Wenn die erste Temperatur $T_1 > 100°C$, insbesondere $T_1 > 120°C$, ist, so ist dies ein Hinweis darauf, dass sich in dem Behälter 104 Fett befindet, z.B. um ein Nahrungsmittel zu braten oder um ein Nahrungsmittel zu frittieren. Wenn gleichzeitig die zweite Temperatur $T_2 < 120°C$, insbesondere $T_2 < 100°C$, ist, so ist dies ein Hinweis darauf, dass sich das Fett nur am Boden des Behälters 104 befindet, und dass somit vermutlich ein Nahrungsmittel gebraten wird. Das Braten eines Nahrungsmittels in dem Behälter 105 kann zulässig sein, so dass eine solche Nutzungssituation als unkritisch betrachtet werden kann.

Wenn jedoch die zweite Temperatur $T_2 > 100°C$, insbesondere $T_2 > 120°C$, ist, so ist dies ein Hinweis darauf, dass sich das Fett auch im zweiten Bereich 222 des Behälters 104 befindet, und dass somit vermutlich ein Nahrungsmittel frittiert wird. Das Frittieren eines Nahrungsmittels kann ggf. unzulässig sein (z.B. weil die Vorrichtung 200 nicht dafür ausgelegt wurde), so dass eine solche Nutzungssituation als kritisch betrachtet werden kann.

In einer weiteren Situation kann erkannt werden, dass die erste Temperatur $T_1 < 0°C$, insbesondere $T_1 < -5°C$, ist. Dies ist ein Hinweis darauf, dass sich in dem Behälter 104 ein gefrorener Inhalt 204 befindet. Wenn gleichzeitig die zweite Temperatur $T_2 > -5°C$, insbesondere $T_2 > 0°C$, ist, so kann diese Nutzungssituation ggf. als unkritisch betrachtet werden, da sich nur eine geringe Menge an gefrorenem Inhalt 204 in dem Behälter 104 befindet.

Wenn jedoch die zweite Temperatur $T_2 < 0°C$, insbesondere $T_2 < -5°C$, ist, so ist dies ein Hinweis darauf, dass sich in dem Behälter 104 eine relativ große Menge an gefrorenem Inhalt 204 (z.B. ein aufzutauendes und/oder aufzuwärmendes Nahrungsmittel) befindet. Eine solche Nutzungssituation kann als kritisch betrachtet werden, da die Aktivierung der Temperierungseinheit 105 (insbesondere eines Heizelements der Temperierungseinheit 105) dazu führen könnte, dass sich der Inhalt 204 am Boden des Behälters 104 erwärmt und dabei ausdehnt, während der Inhalt 204 in dem zweiten Bereich 222 weiterhin gefroren ist. Der Inhalt 204 könnte dann ggf. teilweise aus dem Behälter 104 katapultiert werden.

Die Steuereinheit 101 der Vorrichtung 200 kann somit eingerichtet sein, auf Basis der ersten Temperaturdaten des ersten Temperatursensors 111 und auf Basis der zweiten Temperaturdaten des zweiten Temperatursensors 110 eine kritische Nutzungssituation zu detektieren. Des Weiteren kann die Steuereinheit 101 eingerichtet sein, eine Maßnahme zu veranlassen, wenn eine kritische Nutzungssituation erkannt wird. Die Maßnahme kann darauf ausgerichtet sein, mögliche Auswirkungen der kritischen Nutzungssituation zu vermeiden oder zu milden. Beispielhafte Maßnahmen sind:

- die Ausgabe eines Hinweises in Bezug auf die erkannte Nutzungssituation an den Nutzer der Vorrichtung 200 bzw. der Küchenmaschine 100 (über die Benutzerschnittstelle 108); und/oder
- den Betrieb der Temperierungseinheit 105 zu unterbrechen oder zumindest zu drosseln.

So kann in effizienter und zuverlässiger Weise die Sicherheit der Vorrichtung 200 bzw. einer Küchenmaschine 100 erhöht werden.

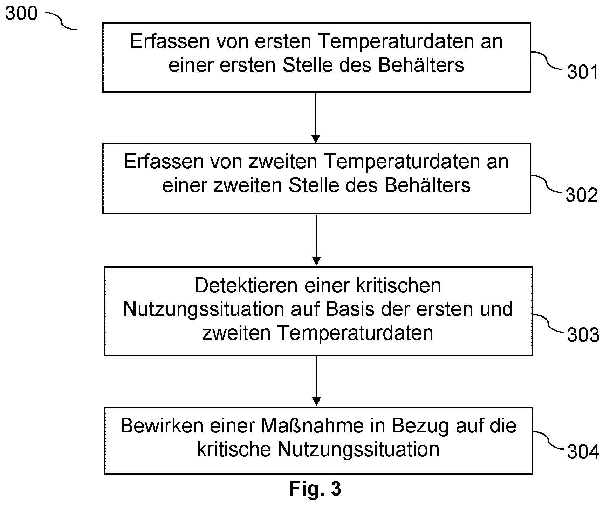

Fig. 3 zeigt ein Ablaufdiagramm eines beispielhaften Verfahrens 300 zum Schutz einer Küchenmaschine 100 und/oder zur Erhöhung der Sicherheit einer Küchenmaschine 100. Das Verfahren 300 kann durch eine Steuereinheit 101 der Küchenmaschine 100 ausgeführt werden. Die Küchenmaschine 100 umfasst einen Behälter 104 zur Aufnahme eines Nahrungsmittels 204. Des Weiteren umfasst die Küchenmaschine 100 eine Heizeinheit 105, die eingerichtet ist, den Behälter 104 von zumindest einer Seite (insbesondere von der Unterseite) des Behälters 104 her zu erwärmen.

Das Verfahren 300 umfasst das Erfassen 301 von ersten Temperaturdaten 211 in Bezug auf eine erste Temperatur an einer ersten Stelle des Behälters 104 und/oder in einem ersten Bereich 221 des Behälters 104. Die erste Stelle kann dabei an der Unterseite oder am Boden des Behälters 104 angeordnet sein. Somit können die ersten Temperaturdaten 211 als Indikator für die Temperatur des Inhalts 204 des Behälters 104 in dem ersten (bodennahmen) Bereich 221 des Behälters 104 verwendet werden.

Des Weiteren umfasst das Verfahren 300 das Erfassen 302 von zweiten Temperaturdaten 210 in Bezug auf eine zweite Temperatur an einer zweiten Stelle und/oder in einem zweiten Bereich 222 des Behälters 104. Die zweite Stelle des Behälters 104 kann an einer Seitenwand des Behälters 104 angeordnet sein, insbesondere in einem bestimmten Abstand (z.B. 5mm oder mehr, oder 10mm oder mehr, oder 2cm oder mehr) zum Boden des Behälters 104. Somit können die zweiten Temperaturdaten 210 als Indikator für die Temperatur des Inhalts 204 des Behälters 104 in dem zweiten Bereich 222 des Behälters 104 verwendet werden, wobei der zweite Bereich 222 über dem ersten Bereich 221 des Behälters angeordnet ist.

Das Verfahren 300 umfasst ferner das Detektieren 303, auf Basis der ersten Temperaturdaten 211 und auf Basis der zweiten Temperaturdaten 210, einer kritischen Nutzungssituation der Küchenmaschine 100. Insbesondere kann erkannt werden, dass die Küchenmaschine 100 zum Frittieren verwendet wird, obwohl dies ggf. nicht zulässig ist. Alternativ oder ergänzend kann z.B. erkannt werden, dass die Küchenmaschine 100 zum Auftauen eines Nahrungsmittels verwendet wird, was ggf. zu einer kritischen Drucksituation in dem Behälter 104 führen könnte.

Außerdem umfasst das Verfahren 300, in Reaktion darauf (d.h. in Reaktion auf das Detektieren 303 einer kritischen Nutzungssituation), das Bewirken 304 zumindest einer Maßnahme in Bezug auf die kritische Nutzungssituation. Insbesondere kann eine Maßnahme bewirkt werden, um eine Auswirkung der kritischen Nutzungssituation auf die Küchenmaschine 100 und/oder auf einen Nutzer der Küchenmaschine 100 abzumildern. So kann die Sicherheit einer Küchenmaschine 100 in effizienter und zuverlässiger Weise erhöht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Küchenmaschine und/oder des vorgeschlagenen Verfahrens veranschaulichen sollen.

**Patentansprüche**

1. Küchenmaschine (100); wobei die Küchenmaschine (100) umfasst,

   - einen Behälter (104) zur Aufnahme eines Nahrungsmittels (204);
   - eine Heizeinheit (105), die eingerichtet ist, den Behälter (104) von zumindest einer Seite des Behälters (104) her zu erwärmen;
   - einen ersten Temperatursensor (111), der eingerichtet ist, erste Temperaturdaten (211) in Bezug auf eine erste Temperatur an einer ersten Stelle des Behälters (104) zu erfassen; wobei die ersten Temperaturdaten (211) und/oder die erste Temperatur eine Temperatur des Nahrungsmittels (204) in einem ersten Bereich (221) des Behälters (104) anzeigen;
   - einen zweiten Temperatursensor (110), der eingerichtet ist, zweite Temperaturdaten (210) in Bezug auf eine zweite Temperatur an einer zweiten Stelle des Behälters (104) zu erfassen; wobei die zweiten Temperaturdaten (210) und/oder die zweite Temperatur eine Temperatur des Nahrungsmittels (204) in einem zweiten Bereich (222) des Behälters (104) anzeigen; wobei der zweite Bereich (220) oberhalb des ersten Bereichs (221) liegt; und
   - eine Steuereinheit (101), die eingerichtet ist,

     - auf Basis der ersten Temperaturdaten (211) für einen bestimmten Zeitpunkt zu bestimmen, dass die Temperatur des Nahrungsmittels (204) in dem ersten Bereich (221) an dem bestimmten Zeitpunkt über einem oberen Temperatur-Schwellenwert liegt;
     - auf Basis der zweiten Temperaturdaten (210) für den bestimmten Zeitpunkt zu bestimmen, dass die Temperatur des Nahrungsmittels (204) in dem zweiten Bereich (222) an dem bestimmten Zeitpunkt über dem oberen Temperatur-Schwellenwert liegt;
     - basierend darauf zu bestimmen, dass an dem bestimmten Zeitpunkt eine kritische Nutzungssituation der Küchenmaschine (100) vorliegt, insbesondere eine Nutzung der Küchenmaschine (100) zum Frittieren; und
     - in Reaktion darauf zumindest eine Maßnahme in Bezug auf die kritische Nutzungssituation zu veranlassen.

2. Küchenmaschine (100); wobei die Küchenmaschine (100) umfasst,

   - einen Behälter (104) zur Aufnahme eines Nahrungsmittels (204);
   - eine Heizeinheit (105), die eingerichtet ist, den Behälter (104) von zumindest einer Seite des Behälters (104) her zu erwärmen;
   - einen ersten Temperatursensor (111), der eingerichtet ist, erste Temperaturdaten (211) in Bezug auf eine erste Temperatur an einer ersten Stelle des Behälters (104) zu erfassen; wobei die ersten Temperaturdaten (211) und/oder die erste Temperatur eine Temperatur des Nahrungsmittels (204) in einem ersten Bereich (221) des Behälters (104) anzeigen;
   - einen zweiten Temperatursensor (110), der eingerichtet ist, zweite Temperaturdaten (210) in Bezug auf eine zweite Temperatur an einer zweiten Stelle des Behälters (104) zu erfassen; wobei die zweiten Temperaturdaten (210) und/oder die zweite Temperatur eine Temperatur des Nahrungsmittels (204) in einem zweiten Bereich (222) des Behälters (104) anzeigen; wobei der zweite Bereich (220) oberhalb des ersten Bereichs (221) liegt; und
   - eine Steuereinheit (101), die eingerichtet ist,

     - auf Basis der ersten Temperaturdaten (211) für einen bestimmten Zeitpunkt zu bestimmen, dass die Temperatur des Nahrungsmittels (204) in dem ersten Bereich (221) an dem bestimmten Zeitpunkt unter einem unteren Temperatur-Schwellenwert liegt;
     - auf Basis der zweiten Temperaturdaten (210) für den bestimmten Zeitpunkt zu bestimmen, dass die Temperatur des Nahrungsmittels (204) in dem zweiten Bereich (222) an dem bestimmten Zeitpunkt unter dem unteren Temperatur-Schwellenwert liegt;
     - basierend darauf zu bestimmen, dass an dem bestimmten Zeitpunkt eine kritische Nutzungssituation der Küchenmaschine (100) vorliegt, insbesondere eine Nutzung der Küchenmaschine (100) zum Auftauen; und
     - in Reaktion darauf zumindest eine Maßnahme in Bezug auf die kritische Nutzungssituation zu veranlassen.

3. Küchenmaschine (100) gemäß einem der vorhergehenden Ansprüche, wobei

   - die Heizeinheit (105) eingerichtet ist, eine Unterseite des Behälters (104) zu erwärmen; und
   - die erste Stelle an der Unterseite des Behälters (104) angeordnet ist; und
   - die zweite Stelle an einer Seitenwand des Behälters (104) angeordnet ist.

4.  Küchenmaschine (100) gemäß Anspruch 3, wobei die zweite Stelle um 5mm oder mehr, oder um 10mm oder mehr von einem Boden und/oder von der Unterseite des Behälters (104) beabstandet ist.

5.  Küchenmaschine (100) gemäß einem der vorhergehenden Ansprüche, wobei

    - die erste Stelle und die zweite Stelle an unterschiedlich orientierten Wänden des Behälters (104) angeordnet sind; und/oder
    - die erste Stelle und die zweite Stelle um 5cm oder mehr voneinander beabstandet sind; und/oder
    - die erste Stelle an einem Boden des Behälters (104) angeordnet ist; und
    - die zweite Stelle von dem Boden des Behälters (104) beabstandet ist, insbesondere um 5mm oder mehr, oder um 10mm oder mehr.

6.  Küchenmaschine (100) gemäß einem der vorhergehenden Ansprüche, wobei die Steuereinheit (101) eingerichtet ist, die durch die ersten Temperaturdaten (211) angezeigte erste Temperatur mit der durch die zweiten Temperaturdaten (210) angezeigten zweiten Temperatur zu vergleichen, um eine kritische Nutzungssituation der Küchenmaschine (100) zu detektieren.

7.  Küchenmaschine (100) gemäß einem der vorhergehenden Ansprüche, wobei die Maßnahme darauf ausgerichtet ist, eine Auswirkung der kritischen Nutzungssituation auf die Küchenmaschine (100) und/oder auf einen Nutzer der Küchenmaschine (100) abzumildern.

8.  Küchenmaschine (100) gemäß einem der vorhergehenden Ansprüche, wobei

    - die Maßnahme das Ausgeben eines Hinweises in Bezug auf die kritische Nutzungssituation an einen Nutzer der Küchenmaschine (100) umfasst; und/oder
    - die Maßnahme das Unterbinden oder das Drosseln eines Betriebs der Heizeinheit (105) umfasst.

9.  Küchenmaschine (100) gemäß einem der vorhergehenden Ansprüche, wobei der erste Temperatursensor (111) einen temperaturabhängigen Messwiderstand umfasst.

10. Küchenmaschine (100) gemäß einem der vorhergehenden Ansprüche, wobei der zweite Temperatursensor (110) einen Infrarot, kurz IR, Sensor umfasst, der auf die zweite Stelle des Behälters (104) gerichtet ist, und der eingerichtet ist, zweite Temperaturdaten (210) in Bezug auf eine Intensität von Strahlung im Infrarot-Spektralbereich zu erfassen, die von der zweiten Stelle des Behälters (104) ausgeht.

11. Küchenmaschine (100) gemäß einem der vorhergehenden Ansprüche, wobei

    - die Küchenmaschine (100) einen Gewichtssensor (106) umfasst, der eingerichtet ist, Gewichtsdaten in Bezug auf ein Gewicht des Nahrungsmittels (204) in dem Behälter (104) zu erfassen; und
    - die Steuereinheit (101) eingerichtet ist, unter Berücksichtigung der Gewichtsdaten zu bestimmen, ob eine kritische Nutzungssituation vorliegt oder nicht.

12. Verfahren (300) zur Erhöhung der Sicherheit einer Küchenmaschine (100), die einen Behälter (104) zur Aufnahme eines Nahrungsmittels (204), und eine Heizeinheit (105) umfasst; wobei die Heizeinheit (105) eingerichtet ist, den Behälter (104) von zumindest einer Seite des Behälters (104) her zu erwärmen; wobei das Verfahren (300) umfasst,

    - Erfassen (301) von ersten Temperaturdaten (211) in Bezug auf eine erste Temperatur an einer ersten Stelle des Behälters (104); wobei die ersten Temperaturdaten (211) und/oder die erste Temperatur eine Temperatur des Nahrungsmittels (204) in einem ersten Bereich (221) des Behälters (104) anzeigen;
    - Erfassen (302) von zweiten Temperaturdaten (210) in Bezug auf eine zweite Temperatur an einer zweiten Stelle des Behälters (104); wobei die zweiten Temperaturdaten (210) und/oder die zweite Temperatur eine Temperatur des Nahrungsmittels (204) in einem zweiten Bereich (222) des Behälters (104) anzeigen; wobei der zweite Bereich (220) oberhalb des ersten Bereichs (221) liegt;
    - Bestimmen, auf Basis der ersten Temperaturdaten (211) für einen bestimmten Zeitpunkt, dass die Temperatur des Nahrungsmittels (204) in dem ersten Bereich (221) an dem bestimmten Zeitpunkt über einem oberen Temperatur-Schwellenwert liegt;
    - Bestimmen, auf Basis der zweiten Temperaturdaten (210) für den bestimmten Zeitpunkt, dass die Temperatur des Nahrungsmittels (204) in dem zweiten Bereich (222) an dem bestimmten Zeitpunkt über dem oberen Temperatur-Schwellenwert liegt;
- basierend darauf Bestimmen, dass an dem bestimmten Zeitpunkt eine kritische Nutzungssituation der Küchenmaschine (100) vorliegt, insbesondere eine Nutzung der Küchenmaschine (100) zum Frittieren; und
- in Reaktion darauf, Bewirken (304) zumindest einer Maßnahme in Bezug auf die kritische Nutzungssituation.

13. Verfahren (300) zur Erhöhung der Sicherheit einer Küchenmaschine (100), die einen Behälter (104) zur Aufnahme eines Nahrungsmittels (204), und eine Heizeinheit (105) umfasst; wobei die Heizeinheit (105) eingerichtet ist, den Behälter (104) von zumindest einer Seite des Behälters (104) her zu erwärmen; wobei das Verfahren (300) umfasst,

- Erfassen (301) von ersten Temperaturdaten (211) in Bezug auf eine erste Temperatur an einer ersten Stelle des Behälters (104); wobei die ersten Temperaturdaten (211) und/oder die erste Temperatur eine Temperatur des Nahrungsmittels (204) in einem ersten Bereich (221) des Behälters (104) anzeigen;
- Erfassen (302) von zweiten Temperaturdaten (210) in Bezug auf eine zweite Temperatur an einer zweiten Stelle des Behälters (104); wobei die zweiten Temperaturdaten (210) und/oder die zweite Temperatur eine Temperatur des Nahrungsmittels (204) in einem zweiten Bereich (222) des Behälters (104) anzeigen; wobei der zweite Bereich (220) oberhalb des ersten Bereichs (221) liegt;
- Bestimmen, auf Basis der ersten Temperaturdaten (211) für einen bestimmten Zeitpunkt, dass die Temperatur des Nahrungsmittels (204) in dem ersten Bereich (221) an dem bestimmten Zeitpunkt unter einem unteren Temperatur-Schwellenwert liegt;
- Bestimmen, auf Basis der zweiten Temperaturdaten (210) für den bestimmten Zeitpunkt, dass die Temperatur des Nahrungsmittels (204) in dem zweiten Bereich (222) an dem bestimmten Zeitpunkt unter dem unteren Temperatur-Schwellenwert liegt;
- basierend darauf Bestimmen, dass an dem bestimmten Zeitpunkt eine kritische Nutzungssituation der Küchenmaschine (100) vorliegt, insbesondere eine Nutzung der Küchenmaschine (100) zum Auftauen; und
- in Reaktion darauf, Bewirken (304) zumindest einer Maßnahme in Bezug auf die kritische Nutzungssituation.

**Claims**

1. Food processor (100); wherein the food processor (100) comprises,

- a container (104) for receiving a food product (204);
- a heating unit (105) which is designed to heat up the container (104) from at least one side of the container (104);
- a first temperature sensor (111), which is designed to capture first temperature data (211) in respect of a first temperature at a first point on the container (104); wherein the first temperature data (211) and/or the first temperature indicate a temperature of the food product (204) in a first region (221) of the container (104);
- a second temperature sensor (110) which is designed to capture second temperature data (210) in respect of a second temperature at a second point on the container (104); wherein the second temperature data (210) and/or the second temperature indicate a temperature of the food product (204) in a second region (222) of the container (104); wherein the second region (220) lies above the first region (221); and
- a control unit (101), which is configured

- to determine, on the basis of the first temperature data (211) for a specific time instant, that the temperature of the food product (204) in the first region (221) at the specific time instant lies above an upper temperature threshold value;
- to determine, on the basis of the second temperature data (210) for the specific time instant, that the temperature of the food product (204) in the second region (222) at the specific time instant lies above the upper temperature threshold value;
- to determine on this basis that a critical usage situation of the food processor (100) exists at the specific time instant, in particular a use of the food processor (100) for deep-frying; and
- in response thereto, to trigger at least one measure in respect of the critical usage situation.

2. Food processor (100); wherein the food processor (100) comprises,

- a container (104) for receiving a food product (204);
- a heating unit (105) which is designed to heat up the container (104) from at least one side of the container (104);
- a first temperature sensor (111), which is designed to capture first temperature data (211) in respect of a first temperature at a first point on the container (104); wherein the first temperature data (211) and/or the first temperature indicate a temperature of the food product (204) in a first region (221) of the container (104);
- a second temperature sensor (110) which is designed to capture second temperature data (210) in respect of a second temperature at a second point on the container (104); wherein the second temperature data (210) and/or the second temperature indicate a temperature of the food product (204) in a second region (222) of the container (104); wherein the second region (220) lies above the first region (221); and
- a control unit (101), which is configured

- to determine on the basis of the first temperature data (211) for a specific time instant that the temperature of the food product (204) in the first region (221) at the specific time instant lies below a lower temperature threshold value;
- to determine on the basis of the second temperature data (210) for the specific time instant that the temperature of the food product (204) in the second region (222) at the specific time instant lies below the lower temperature threshold value;
- to determine on this basis that a critical usage situation of the food processor (100) exists at the specific time instant, in particular a use of the food processor (100) for defrosting; and
- in response thereto, to trigger at least one measure in respect of the critical usage situation.

3. Food processor (100) according to one of the preceding claims, wherein

- the heating unit (105) is designed to heat up a lower side of the container (104); and
- the first point is arranged on the lower side of the container (104); and
- the second point is arranged on a side wall of the container (104).

4. Food processor (100) according to claim 3, wherein the second point is distanced by 5mm or more, or by 10mm or more from a base and/or from the lower side of the container (104).

5. Food processor (100) according to one of the preceding claims, wherein

- the first point and the second point are arranged on differently oriented walls of the container (104); and/or
- the first point and the second point are distanced from one another by 5cm or more; and/or
- the first point is arranged on a base of the container (104); and
- the second point is distanced from the base of the container (104), in particular by 5mm or more or by 10mm or more.

6. Food processor (100) according to one of the preceding claims, wherein the control unit (101) is designed to compare the first temperature indicated by the first temperature data (211) with the second temperature indicated by the second temperature data (210) in order to detect a critical usage situation of the food processor (100).

7. Food processor (100) according to one of the preceding claims, wherein the measure is designed to reduce an effect of the critical usage situation on the food processor (100) and/or on a user of the food processor (100).

8. Food processor (100) according to one of the preceding claims, wherein

- the measure comprises the outputting of an indication in respect of the critical usage situation to a user of the food processor (100); and/or
- the measure comprises preventing and/or throttling an operation of the heating unit (105).

9. Food processor (100) according to one of the preceding claims, wherein the first temperature sensor (111) comprises a temperature-dependent measuring resistor.

10. Food processor (100) according to one of the preceding claims, wherein the second temperature sensor (110) comprises an infrared, in short IR, sensor, which is directed at the second point on the container (104) and which is designed to capture second temperature data (210) in respect of an intensity of radiation in the infrared spectral range, which emanates from the second point on the container (104).

11. Food processor (100) according to one of the preceding claims, wherein

- the food processor (100) comprises a weight sensor (106), which is designed to capture weight data in respect of a weight of the food product (204) in the container (104); and
- the control unit (101) is designed to determine, by taking account of the weight data, whether or not a critical usage situation exists.

**12.** Method (300) for increasing the safety of a food processor (100), which comprises a container (104) for receiving a food product (204), and a heating unit (105); wherein the heating unit (105) is designed to heat up the container (104) from at least one side of the container (104); wherein the method (300) comprises,

- capturing (301) first temperature data (211) in respect of a first temperature at a first point on the container (104); wherein the first temperature data (211) and/or the first temperature indicate a temperature of the food product (204) in a first region (221) of the container (104);
- capturing (302) second temperature data (210) in respect of a second temperature at a second point on the container (104); wherein the second temperature data (210) and/or the second temperature indicate a temperature of the food product (204) in a second region (222) of the container (104); wherein the second region (220) lies above the first region (221);
- determining, on the basis of the first temperature data (211) for a specific time instant, that the temperature of the food product (204) in the first region (221) at the specific time instant lies above an upper temperature threshold value;
- determining, on the basis of the second temperature data (210) for the specific time instant, that the temperature of the food product (204) in the second region (222) at the specific time instant lies above the upper temperature threshold value;
- determining on this basis that a critical usage situation of the food processor (100) exists at the specific time instant, in particular a use of the food processor (100) for deep-frying; and
- in response thereto, effecting (304) at least one measure in respect of the critical usage situation.

**13.** Method (300) for increasing the safety of a food processor (100), which comprises a container (104) for receiving a food product (204), and a heating unit (105); wherein the heating unit (105) is designed to heat up the container (104) from at least one side of the container (104); wherein the method (300) comprises,

- capturing (301) first temperature data (211) in respect of a first temperature at a first point on the container (104); wherein the first temperature data (211) and/or the first temperature indicate a temperature of the food product (204) in a first region (221) of the container (104);
- capturing (302) second temperature data (210) in respect of a second temperature at a second point on the container (104); wherein the second temperature data (210) and/or the second temperature indicate a temperature of the food product (204) in a second region (222) of the container (104); wherein the second region (220) lies above the first region (221);
- determining, on the basis of the first temperature data (211) for a specific time instant, that the temperature of the food product (204) in the first region (221) at the specific time instant lies below a lower temperature threshold value;
- determining, on the basis of the second temperature data (210) for the specific time instant, that the temperature of the food product (204) in the second region (222) at the specific time instant lies below the lower temperature threshold value;
- determining on this basis that a critical usage situation of the food processor (100), in particular a use of the food processor (100) for defrosting, exists at the specific time instant; and
- in response thereto, effecting (304) at least one measure in respect of the critical usage situation.

**Revendications**

**1.** Robot de cuisine (100) ; dans lequel le robot de cuisine (100) comprend :

- un récipient (104) recevant un aliment (204) ;
- une unité chauffante (105) configurée pour chauffer le récipient (104) depuis au moins un côté du récipient (104) ;
- un premier capteur de température (111) configuré pour collecter des premières données de température (211) se rapportant à une première température en un premier point du récipient (104) ; les premières données de température (211) et/ou la première température indiquant une température de l'aliment (204) dans une première zone (221) du récipient (104) ;

- un deuxième capteur de température (110) configuré pour collecter des deuxièmes données de température (210) se rapportant à une deuxième température en un deuxième point du récipient (104) ; les deuxièmes données de température (210) et/ou la deuxième température indiquant une température de l'aliment (204) dans une deuxième zone (222) du récipient (104) ; la deuxième zone (220) se trouvant au-dessus de la première zone (221) ; et
- une unité de commande (101) configurée pour

- déterminer, sur base des premières données de température (211) à un instant déterminé, que la température de l'aliment (204) dans la première zone (221) à l'instant déterminé, se trouve au-dessus d'une valeur de seuil de température supérieure ;
- déterminer, sur base des deuxièmes données de température (210) à l'instant déterminé, que la température de l'aliment (204) dans la deuxième zone (222) à l'instant déterminé, se trouve au-dessus de la valeur de seuil de température supérieure ;
- se basant là-dessus, déterminer qu'à l'instant déterminé, on est en présence d'une situation d'exploitation critique du robot de cuisine (100), en particulier une exploitation du robot de cuisine (100) pour la friture ; et
- enclencher, en réaction à cela, au moins une mesure relative à la situation d'exploitation critique.

2. Robot de cuisine (100) ; dans lequel le robot de cuisine (100) comprend :

- un récipient (104) recevant un aliment (204) ;
- une unité chauffante (105) configurée pour chauffer le récipient (104) depuis au moins un côté du récipient (104) ;
- un premier capteur de température (111) configuré pour collecter des premières données de température (211) se rapportant à une première température en un premier point du récipient (104) ; les premières données de température (211) et/ou la première température indiquant une température de l'aliment (204) dans une première zone (221) du récipient (104) ;
- un deuxième capteur de température (110) configuré pour collecter des deuxièmes données de température (210) se rapportant à une deuxième température en un deuxième point du récipient (104) ; les deuxièmes données de température (210) et/ou la deuxième température indiquant une température de l'aliment (204) dans une deuxième zone (222) du récipient (104) ; la deuxième zone (220) se trouvant au-dessus de la première zone (221) ; et
- une unité de commande (101) configurée pour

- déterminer, sur base des premières données de température (211) à un instant déterminé, que la température de l'aliment (204) dans la première zone (221) à l'instant déterminé, se trouve en dessous d'une valeur de seuil de température inférieure ;
- déterminer, sur base des deuxièmes données de température (210) à l'instant déterminé, que la température de l'aliment (204) dans la deuxième zone (222) à l'instant déterminé, se trouve en dessous de la valeur de seuil de température inférieure ;
- déterminer, sur cette base, qu'à l'instant déterminé, on est en présence d'une situation d'exploitation critique du robot de cuisine (100), en particulier une exploitation du robot de cuisine (100) pour la décongélation ; et
- enclencher, en réaction à cela, au moins une mesure relative à la situation d'exploitation critique.

3. Robot de cuisine (100) selon l'une des revendications précédentes, dans lequel

- l'unité chauffante (105) est configurée pour chauffer un côté inférieur du récipient (104) ; et
- le premier point se trouve sur le côté inférieur du récipient (104) ; et
- le deuxième point se trouve sur une paroi latérale du récipient (104).

4. Robot de cuisine (100) selon la revendication 3, le deuxième point étant écarté d'un fond et/ou du côté inférieur du récipient (104) de 5 mm ou plus, ou de 10 mm ou plus.

5. Robot de cuisine (100) selon l'une des revendications précédentes, dans lequel

- le premier point et le deuxième point se trouvent sur des parois du récipient (104) différemment orientées ; et/ou
- le premier point et le deuxième point sont écartés l'un de l'autre de 5 cm ou plus ; et/ou
- le premier point se trouve sur un fond du récipient (104) ; et

- le deuxième point est écarté du fond du récipient (104), en particulier de 5 mm ou plus, ou de 10 mm ou plus.

6. Robot de cuisine (100) selon l'une des revendications précédentes, dans lequel l'unité de commande (101) est configurée pour comparer la première température indiquée par les premières données de température (211), avec la deuxième température indiquée par les deuxièmes données de température (210), pour détecter une situation d'exploitation critique du robot de cuisine (100).

7. Robot de cuisine (100) selon l'une des revendications précédentes, dans lequel la mesure vise à modérer l'effet de la situation d'exploitation critique sur le robot de cuisine (100) et/ou sur un utilisateur du robot de cuisine (100).

8. Robot de cuisine (100) selon l'une des revendications précédentes, dans lequel

   - la mesure comprend l'émission d'une notification se rapportant à la situation d'exploitation critique à un utilisateur du robot de cuisine (100) ; et/ou
   - la mesure comprend l'interdiction ou l'enrayement du fonctionnement de l'unité chauffante (105).

9. Robot de cuisine (100) selon l'une des revendications précédentes, dans lequel le premier capteur de température (111) comprend une résistance de mesure dépendant de la température.

10. Robot de cuisine (100) selon l'une des revendications précédentes, dans lequel le deuxième capteur de température (110) comprend un capteur infrarouge, en abrégé IR, lequel est dirigé sur le deuxième point du récipient (104) et qui est configuré pour collecter des deuxièmes données de température (210) relatives à l'intensité du rayonnement dans la région du spectre de l'infrarouge, qui part du deuxième point du récipient (104).

11. Robot de cuisine (100) selon l'une des revendications précédentes, dans lequel

   - le robot de cuisine (100) comprend un capteur de poids (106) configuré pour collecter des données de poids se rapportant à un poids de l'aliment (204) dans le récipient (104) ; et
   - l'unité de commande (101) est configurée pour déterminer, en tenant compte des données de poids, si on est en présence d'une situation d'exploitation critique ou pas.

12. Procédé (300) d'augmentation de la sécurité d'un robot de cuisine (100), qui comprend un récipient (104) recevant un aliment (204), et une unité chauffante (105) ; l'unité chauffante (105) étant configurée pour chauffer le récipient (104) depuis au moins un côté du récipient (104) ; dans lequel le procédé (300) comprend :

   - la détection (301) de premières données de température (211) se rapportant à une première température en un premier point du récipient (104) ; les premières données de température (211) et/ou la première température indiquant une température de l'aliment (204) dans une première zone (221) du récipient (104) ;
   - la détection (302) de deuxièmes données de température (210) se rapportant à une deuxième température en un deuxième point du récipient (104) ; les deuxièmes données de température (210) et/ou la deuxième température indiquant une température de l'aliment (204) dans une deuxième zone (222) du récipient (104) ; la deuxième zone (220) se trouvant au-dessus de la première zone (221) ;
   - la détermination, sur base des premières données de température (211) à un instant déterminé, que la température de l'aliment (204) dans la première zone (221) à l'instant déterminé, se trouve au-dessus d'une valeur de seuil de température supérieure ;
   - la détermination, sur base des deuxièmes données de température (210) à l'instant déterminé, que la température de l'aliment (204) dans la deuxième zone (222) à l'instant déterminé, se trouve au-dessus de la valeur de seuil de température supérieure ;
   - sur cette base, la détermination qu'à l'instant déterminé, on est en présence d'une situation d'exploitation critique du robot de cuisine (100), en particulier une exploitation du robot de cuisine (100) pour la friture ; et
   - l'enclenchement, en réaction à cela, d'au moins une mesure relative à la situation d'exploitation critique.

13. Procédé (300) d'augmentation de la sécurité d'un robot de cuisine (100), qui comprend un récipient (104) recevant un aliment (204), et une unité chauffante (105) ; l'unité chauffante (105) étant configurée pour chauffer le récipient (104) depuis au moins un côté du récipient (104) ; dans lequel le procédé (300) comprend :

   - la détection (301) de premières données de température (211) se rapportant à une première température en un premier point du récipient (104) ; les premières données de température (211) et/ou la première température indiquant une température de l'aliment (204) dans une première zone (221) du récipient (104) ;

- la détection (302) de deuxièmes données de température (210) se rapportant à une deuxième température en un deuxième point du récipient (104) ; les deuxièmes données de température (210) et/ou la deuxième température indiquant une température de l'aliment (204) dans une deuxième zone (222) du récipient (104) ; la deuxième zone (220) se trouvant au-dessus de la première zone (221) ;

- la détermination, sur base des premières données de température (211) à un instant déterminé, que la température de l'aliment (204) dans la première zone (221) à l'instant déterminé, se trouve en dessous d'une valeur de seuil de température inférieure ;

- la détermination, sur base des deuxièmes données de température (210) à l'instant déterminé, que la température de l'aliment (204) dans la deuxième zone (222) à l'instant déterminé, se trouve en dessous de la valeur de seuil de température inférieure ;

- sur cette base, la détermination qu'à l'instant déterminé, on est en présence d'une situation d'exploitation critique du robot de cuisine (100), en particulier d'une exploitation du robot de cuisine (100) pour la décongélation ; et

- l'enclenchement, en réaction à cela, d'au moins une mesure relative à la situation d'exploitation critique.

**Fig. 1a**

**Fig. 1b**

**Fig. 1c**

**Fig. 2**

300

| Erfassen von ersten Temperaturdaten an einer ersten Stelle des Behälters | 301 |

↓

| Erfassen von zweiten Temperaturdaten an einer zweiten Stelle des Behälters | 302 |

↓

| Detektieren einer kritischen Nutzungssituation auf Basis der ersten und zweiten Temperaturdaten | 303 |

↓

| Bewirken einer Maßnahme in Bezug auf die kritische Nutzungssituation | 304 |

**Fig. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2730203 A1
- DE 202011050875 A1
- US 2019045973 A1
- CN 109381081 A